Europäisches Patentamt

European Patent Office

Office européen des brevets

(19)

(11) EP 0 615 627 B1

(12) FASCICULE DE BREVET EUROPEEN

(45) Date de publication et mention
de la délivrance du brevet:
**02.09.1998 Bulletin 1998/36**

(21) Numéro de dépôt: **93913118.1**

(22) Date de dépôt: **11.06.1993**

(51) Int Cl.⁶: **G01V 1/22**

(86) Numéro de dépôt international:
**PCT/FR93/00562**

(87) Numéro de publication internationale:
**WO 93/25919 (23.12.1993 Gazette 1993/30)**

(54) **SYSTEME D'ACQUISITION SISMIQUE POURVU DE MOYENS DE TRAITEMENT DECENTRALISES**

ERFASSUNGSSYSTEM MIT VORRICHTUNG ZUR DEZENTRALISIERTER VERARBEITUNG

SEISMIC DATA ACQUISITION SYSTEM WITH DECENTRALIZED PROCESSING MEANS

(84) Etats contractants désignés:
**DE FR GB IT NL**

(30) Priorité: **11.06.1992 FR 9207243**

(43) Date de publication de la demande:
**21.09.1994 Bulletin 1994/38**

(73) Titulaire: **INSTITUT FRANCAIS DU PETROLE**
**92502 Rueil-Malmaison (FR)**

(72) Inventeurs:
• **RIALAN, Joseph**
**F-92190 Meudon (FR)**
• **GROUFFAL, Christian**
**F-92500 Rueil-Malmaison (FR)**

(56) Documents cités:
**EP-A- 0 226 366**          **EP-A- 0 443 858**
**WO-A-80/02877**          **GB-A- 2 090 408**
**US-A- 4 276 619**          **US-A- 4 639 901**
**US-A- 4 885 724**

## Description

L'invention concerne un système d'acquisition sismique doté de moyens de traitement décentralisés. Plus particulièrement l'invention concerne un système d'acquisition de données comportant une ou plusieurs unités d'acquisition aptes à effectuer des traitements divers de données acquises localement, et de réduire dans une large mesure le volume de données échangées entre elles et une station centrale de commande et d'enregistrement ou bien un boîtier de commande portable.

Un tel système peut servir par exemple dans le domaine de la prospection sismique où l'on est amené à déployer sur une zone à explorer un très grand nombre de récepteurs sismiques (constitué chacun d'un ou plusieurs capteurs élémentaires combinés pour former une "bretelle" et délivrant un signal que l'on désigne par "trace"), ces récepteurs étant placés au contact d'une formation souterraine, et à réaliser des cycles d'émission-réception avec transmission dans le sol d'ébranlements sismiques par déclenchement commandé d'une source sismique, réception des signaux renvoyés par les discontinuités du sous-sol et acquisition des signaux reçus. Une telle acquisition est effectuée par exemple au moyen d'une pluralité de boîtiers d'acquisition répartis sur le terrain, adaptés chacun à numériser et mémoriser les signaux reçus par un ou plusieurs capteurs, et, sur ordre d'une station centrale, à les transmettre séquentiellement à celle-ci par câble ou par radio.

Différents systèmes d'acquisition sont décrits par exemple dans les brevets FR 2.511.772, 2.538.561, 2.599.533, 2.627.652 ou la demande de brevet français EN. 90/16443 déposés par le demandeur.

Par les brevets US-A-4 639 901 et 4 885 724, on connaît un système de prospection sismique comprenant un laboratoire central en liaison radio avec un ensemble d'appareils d'acquisition adaptés à collecter des signaux sismiques reçus par des géophones implantés sur le terrain. Chaque appareil comporte une unité de contrôle programmée pour tester l'équipement électronique d'acquisition et réaliser certains traitements et combinaisons des signaux reçus avant leur enregistrement sur un enregistreur à cassette.

Par le brevet GB-A-2 090 408, on connaît un système de prospection sismique marine où les signaux reçus par les différents capteurs répartis le long d'une flûte sismique sont transférés jusqu'au navire qui la remorque en immersion, à un appareil d'acquisition qui les numérise, leur applique différents pré-traitements et codages avant de les transmettre par radio.

Par le brevet PCT WO 80/02877 on connaît aussi un système de prospection sismique comprenant un ensemble d'unités locales d'acquisition de signaux sismiques reçus par des géophones sur le terrain, et une station centrale de commande et d'enregistrement à terre ou aéroportée avec laquelle elles sont en liaison radio.

La tendance actuelle est à l'utilisation de systèmes d'acquisition toujours plus complexes avec un grand nombre de récepteurs répartis parfois sur de grandes distances et aussi de boîtiers d'acquisition. Le volume de données acquises est souvent considérable. Le nombre de traces sismiques à centraliser peut dépasser 1000 dans nombre de cas. Leur transfert à la station centrale de préférence à la fin de chaque période de réception des signaux sismiques, représente une tâche complexe. La station centrale doit être pourvue d'une puissance suffisante pour gérer en temps réel leur centralisation d'une part et aussi pour effectuer en temps réel un certain nombre de pré-traitements : corrélation de traces, combinaisons de traces émanant de capteurs multiples tels que des géophones tri-axiaux etc.

La transmission d'une masse de données importante constitue une autre source de difficultés. Si l'on utilise pour cette centralisation des liaisons radio, comme c'est souvent le cas dans la pratique, il faut tenir compte des restrictions souvent imposées par les réglementations locales pour ce qui concerne l'usage et la disponibilité des fréquences de transmission. L'alternative consistant à transmettre les données à centraliser au moyen de lignes de transmission présente aussi des inconvénients car les câbles capables de transmettre des débits élevés sont complexes et coûteux à réaliser. Aussi bien pour faciliter leur transmission que leur exploitation après transmission, il importe donc de réduire autant qu'il est possible le volume de données à transmettre.

Avant le début des opérations d'acquisition que l'on va mener avec le système de récepteurs et de boitiers d'acquisition ou si besoin est, au cours de ces opérations, il est aussi d'usage de tester le bon fonctionnement de chaque récepteur et/ou de chaque boitier d'acquisition associé. Les capteurs (géophones, hydrophones) sont considérés comme les parties les plus vulnérables des chaines d'acquisition sismiques. On doit vérifier si les paramètres électro-mécaniques statiques et dynamiques propres de chaque récepteur (tels que résistance électrique, sensibilité, fréquence propre de résonance ou coefficient d'amortissement) sont conformes aux spécifications et si les capteurs qui le constituent sont correctement couplés avec le sol, sachant qu'une mauvaise implantation se traduit par une modification significative de leur coefficient d'amortissement et de leur sensibilité.

Il est connu de tester des capteurs tels que des géophones à bobine mobile, en leur appliquant un échelon de courant et en relevant leur courbe de réponse à un tel échelon. Une telle méthode de test décrite par exemple dans le brevet FR 2 613 496 du demandeur, est utilisée pour vérifier le bon fonctionnement de géophones placés dans des sondes de puits. Des moyens de commutation sont placés entre chaque géophone à tester et l'entrée d'une chaîne électronique d'acquisition adaptée à amplifier, numériser et mémoriser les signaux délivrés par ce capteur. Par application d'échelons de courant calibrés, puis connexion du capteur excité à la chaîne d'acquisition associée et transmission à distance sous une forme codée, on dispose de donnéés concer-

nant le capteur proprement dit et aussi la chaîne d'acquisition et de transmission associée.

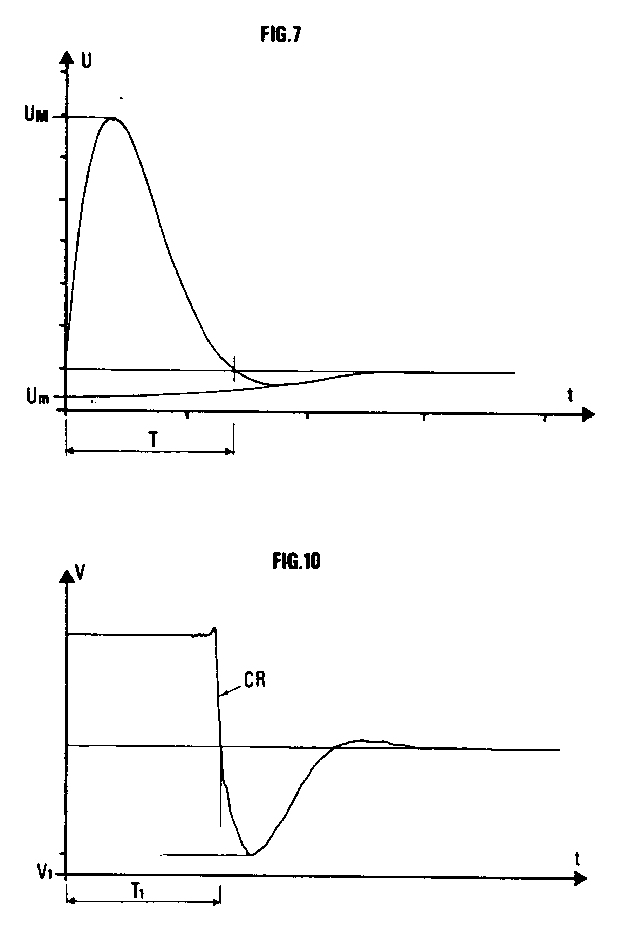

Le test des capteurs est basée sur l'analyse de leur courbe de réponse à un échelon de courant électrique. Cette courbe comporte en général (Fig.7) un premier pic d'amplitude $U_M$ et de "largeur" T, et un deuxième pic d'amplitude Um, et l'on sait, en combinant ces trois caractéristiques, calculer approximativement le coefficient d'amortissement.

Cette méthode n'est pas très précise car les quelques mesures que l'on combine, dépendent beaucoup du bruit acoustique et électronique et elle est inopérante si, du fait d'un amortissement trop rapide, la courbe de réponse est dépourvue de deuxième pic.

Le système d'acquisition sismique selon l'invention possède des capacités de traitement décentralisées, permettant de réduire notablement le volume des données échangées entre au moins un appareil d'acquisition adapté à collecter les données reçues par un ensemble de récepteurs sismiques couplés avec une zone à explorer, et au moins une unité de commande (une station centrale de commande et d'enregistrement par exemple ou bien un boîtier de commande mobile qu'un opérateur peut transporter sur le terrain), par l'intermédiaire de moyens de liaison, chaque appareil d'acquisition comprenant au moins une chaîne d'acquisition pour numériser les signaux reçus par un ou plusieurs récepteurs couplés avec ladite zone, un ensemble de contrôle pour piloter l'acquisition et la mémorisation de signaux et une unité d'émission-réception communiquant avec l'unité de commande.

Le système selon l'invention est caractérisé en ce que chaque ensemble de contrôle comporte une première unité de gestion et un processeur spécialisé dans le traitement de signal DSP piloté par l'unité de gestion, et programmé pour opérer des contrôles de qualité de chaque récepteur sismique et de chaque chaîne d'acquisition, ce processeur étant adapté à fonctionner suivant deux modes de fonctionnement différents, l'un, en mode actif pour effectuer lesdits traitements des données et l'autre, un mode de veille correspondant à une consommation électrique plus réduite.

Le système est adapté par exemple à réaliser une compression de signaux numérisés à transmettre ou à déterminer sans délai les caractéristiques électriques et électro-mécaniques de chaque récepteur sismique par détermination d'un circuit électrique modélisant ledit récepteur ou bien encore des moyens pour combiner des signaux sismiques reçus à des instants différentes par un ou plusieurs desdits récepteurs.

L'unité de commande est par exemple une station centrale de commande et d'enregistrement de signaux sismiques ou un boîtier de commande pouvant être relié à chaque appareil d'acquisition par une liaison courte (une liaison par rayons infra-rouges par exemple) et permettant à un opérateur d'ordonner la conduite immédiate de tests de qualification, dans le but de vérifier la bonne implantation de chaque récepteur et le fonctionnement de chaque chaîne d'acquisition.

De préférence, chaque appareil d'acquisition comporte des moyens autonomes d'alimentation électrique et deux blocs de mémorisation pour le stockage en alternance de données reçus durant des cycles d'émission-réception sismiques successifs, et des moyens de transmission pour transmettre au moins une partie des données contenues dans un premier des deux blocs de mémorisation pendant l'acquisition et le stockage de données dans le deuxième bloc de mémorisation.

Suivant un mode de réalisation, chaque appareil d'acquisition comporte une mémoire permanente réinscriptible pour des instructions eçus de l'unité de commande (station centrale ou boîtier de contrôle mobile) via les moyens de liaison.

Suivant un mode de réalisation, chaque appareil d'acquisition comporte un premier module et un deuxième module de commutation associés à chaque récepteur pour connecter celui-ci et une résistance de référence successivement à l'entrée d'une chaîne d'acquisition de signaux, un troisième et un quatrième module de commutation connectés à un bloc d'alimentation pour appliquer des impulsions de tension ou de courant au récepteur et à la résistance de référence associée, et au moins un oscillateur local pour appliquer des signaux de fréquence déterminée à l'entrée de la chaîne d'acquisition.

Suivant un mode de réalisation, l'ensemble de contrôle est adapté à effectuer des corrélations entre les signaux sismiques reçus par les récepteurs et les signaux sismiques transmis et à transmettre le résultat des corrélations à l'unité d'émission-réception pour leur transmission à l'unité de commande.

Suivant un mode de réalisation chaque ensemble de contrôle comporte des moyens de test de chaque récepteur sismique après son implantation sur le terrain par détermination itérative d'un circuit électrique équivalent modélisant au mieux les caractéristiques électriques et électro-mécaniques de chaque récepteur sismique.

Avec la structure ainsi définie, le système selon l'invention permet de réduire de façon considérable le volume des échanges avec la station centrale, une partie du traitement réalisé jusque là après centralisation, étant en partie réalisé dans chaque appareil d'acquisition. Le débit de données à transmettre devient sensiblement plus faible et les liaisons entre le poste central et les appareils d'acquisition sur le terrain (canaux hertziens ou lignes de transmission) sont plus facilement disponibles et/ou moins onéreuses. La décentralisation de certaines opérations dans les appareils d'acquisition possédant une alimentation électrique autonome, est en plus facilitée si l'on choisit un processeur adapté à fonctionner seulement par intermittence sans perte du contexte de calcul.

Les facultés de traitements complexes données aux boîtiers d'acquisition et les possibilités de communiquer avec eux par une liaison locale, permettent également à un opérateur de vérifier instantanément par des tests la bonne implantation des récepteurs sur le terrain et le bon fonctionnement des chaînes d'acquisition.

D'autres caractéristiques et avantages du dispositif selon l'invention apparaîtront mieux à la lecture de la description ci-après d'un mode de réalisation décrit à titre d'exemple non limitatif, en se référant aux dessins annexés où :

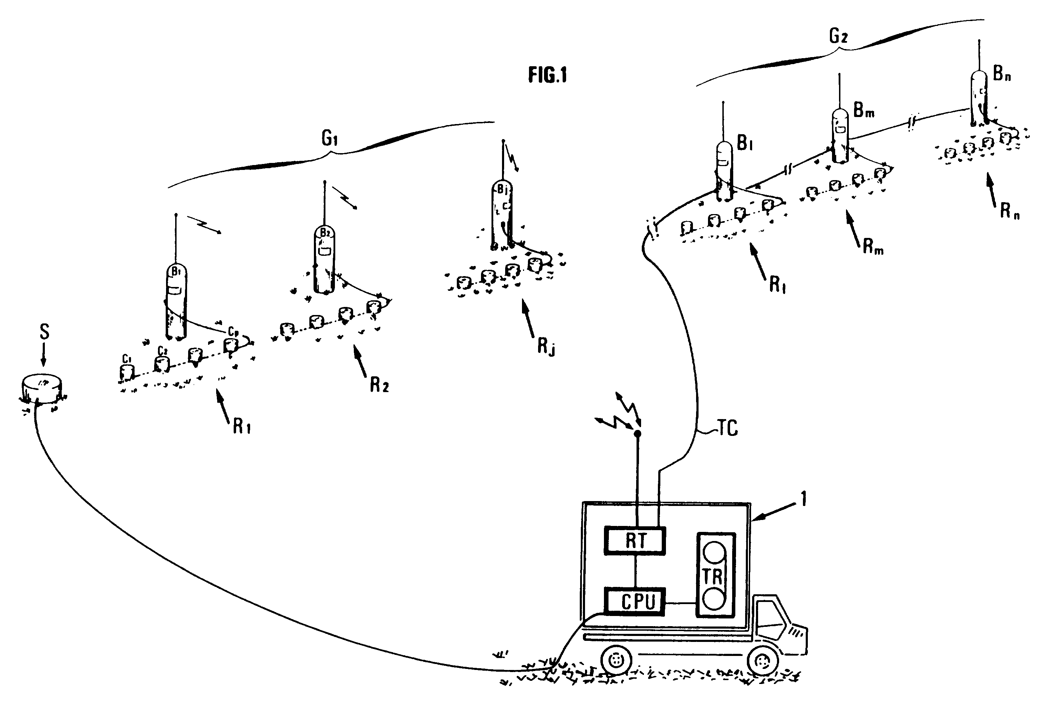

- la Fig.1 montre schématiquement un dispositif d'acquisition sismique sur une zone d'exploration;
- la Fig.2 montre un schéma synoptique d'un appareil d'acquisition;
- les Fig.3 à 6 montrent sous forme de chronogrammes, la répartition dans le temps des différentes fonctions réalisées par les appareils d'acquisition;
- la Fig. 7 montre schématiquement une courbe classique de réponse d'un géophone à un signal impulsionnel reçu;
- les Fig. 8A et 8B montrent schématiquement un géophone et un circuit électrique modélisant son fonctionnement;
- la Fig. 9 montre un mode de réalisation d'un ensemble de test associé à chaque récepteur sismique, permettant l'analyse du fonctionnement de son fonctionnement et de la chaîne d'acquisition associée; et
- la Fig. 10 montre un exemple de courbe de réponse d'un géophone acquise au cours d'opérations de test réalisées localement par un appareil d'acquisition associée.

Un dispositif d'exploration sismique comporte généralement une source d'ondes sismiques S et un système de réception et d'acquisition comprenant souvent un grand nombre de récepteurs $R_1$, $R_2$, ... Rn qui sont répartis le long d'un profil sismique à explorer, des appareils d'acquisition qui sont installés dans des boîtiers $B_1$, $B_2$,... Bn répartis sur le terrain et un poste central de commande et d'enregistrement 1 installé sur un véhicule, pour commander la centralisation à la station 1 des signaux reçus par les récepteurs $R_1$ à $R_n$. Chaque récepteur R comporte généralement plusieurs capteurs élémentaires $C_1$, $C_2$,.... $C_p$ interconnectés électriquement qui produisent chacun une "trace sismique".

On utilise par exemple des boîtiers d'acquisition B tels que ceux décrits dans le brevet FR-A-2 511 772 précité, adaptés indifféremment à communiquer avec la station centrale indifféremment par voie hertzienne ou par lignes de transmission. Avec ce type de boitier, la connexion d'un câble à un boitier a pour effet de désactiver automatiquement les moyens radios d'émission et de réception inclus dans ce boitier et la station centrale est agencée pour se commuter automatiquement sur la voie de communication adéquate pour communiquer avec tout boitier quel que soit son mode de connexion.

On dispose par exemple sur le terrain, un premier groupe $G_1$ de boitiers B1 à Bj communiquant par voie hertzienne avec la station centrale 1 et un deuxième groupe $G_2$ de boitiers B1 à Bn qui, du fait de liaisons radio difficiles dans la zone de travail, doivent être reliés à la station centrale pour un câble de transmission commun TC.

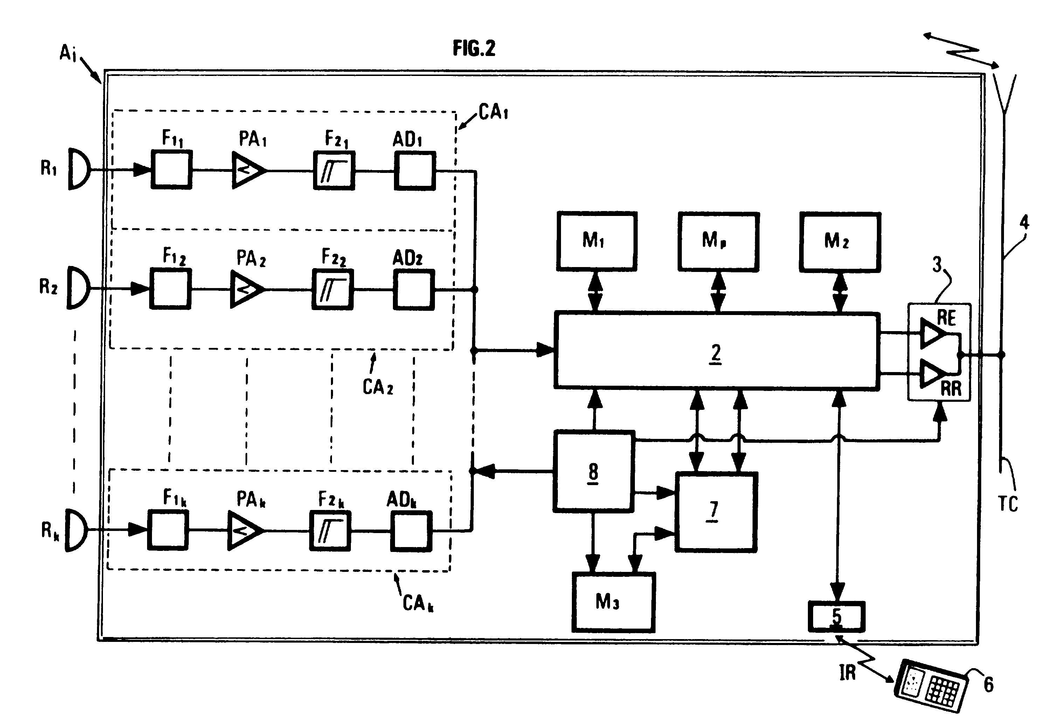

L'appareil d'acquisition A dans chaque boîtier d'acquisition B1 à Bn est adapté à collecter les signaux reçus par un récepteur unique R (cas représenté) ou plus généralement de k récepteurs différents comme le montre la Fig. 2. Chaque appareil d'acquisition Ai a pour fonction de numériser les signaux des récepteurs associés et de les mémoriser. Le poste central comporte un ensemble de commande CPU, un ensemble de communication mixte RT tel que celui décrit dans le brevet FR 2511 772 précité permettant à l'ensemble de commande de communiquer avec les différents boitiers B1 à Bn suivant le cas par radio ou câble de transmission TC. Le poste central commande les déclenchements successifs de la source S, l'acquisition par les différents appareils, des signaux renvoyés par les discontinuités du sous-sol et reçus par les récepteurs R1 à Rn et ensuite, commande la centralisation des données mémorisées. Sur commande du poste central 1, chaque appareil d'acquisition dans les boitiers $B_1$ à $B_n$ lui transfère les données qu'il a mémorisées par la voie de communication adaptée. A cet égard, on peut utiliser avantageusement le système d'acquisition décrit dans les brevets précités avec les modifications propres à l'invention qui vont être décrites ci-après.

Chaque appareil d'acquisition $A_i$ (Fig.2) est adapté à collecter par exemple k signaux captés par un certain nombre k de récepteurs sismiques $R_1$, $R_2$,... $R_k$. A cet effet, il comporte par exemple k chaînes d'acquisition $CA_1$ à $CA_k$ recevant respectivement les k signaux et comportant chacune un filtre passe-bas $F_{11}$, $F_{12}$,... $F_k$ du type V.H.F, un pré-amplificateur $PA_1$, $PA_2$,... $PA_k$, un filtre passe-haut $F_{21}$, $F_{22}$, ... $F2_k$ et un convertisseur analogique-numérique (C.A.N) $C_1$, $C_2$, ...,$C_k$ pour convertir les signaux analogiques amplifiés et filtrés en mots numériques. Toutes les chaînes sont connectées à un microprocesseur de gestion 2 traitant les mots numériques de 16 à 32 bits par exemple, programmé pour gérer l'acquisition et les échanges avec la station centrale 1. Au microprocesseur 2 sont associés deux blocs de mémoire $M_1$ et $M_2$ et une mémoire Mp pour les programmes. Le processeur 2 est connecté à une unité 3 d'émission-réception par radio ou par ligne, adaptée à la voie employée pour la communication avec la station centrale 1. S'il s'agit d'une voie hertzienne, l'unité 3 comporte un radio-émetteur RE et un radio-récepteur RR qui communique avec une antenne 4. Une unité d'interface 5 décrite dans le brevet FR 2.608.780 précité, permet en outre une communication par rayons infra-rouges avec un boîtier d'initialisation 6 à l'aide duquel un opérateur peut éventuellement communiquer au processeur de gestion 2, des instructions d'adressage et de sélection des paramètres de fonctionnement des chaînes d'acquisition ainsi que des numéros d'identification affecté à l'appareil d'acquisition compte-tenu de sa position le long du profil sismique étudié.

Le système selon l'invention comporte dans chaque appareil d'acquisition $A_i$, de préférence un processeur 7 spécialisé dans certains calculs. Il peut s'agir par exemple d'un processeur à 32 bits à virgule flottante du type DSP 96002 fabriqué notamment par Motorola qui est associé à un dispositif du type DMA pour accélérer les transferts par blocs de données entre les deux processeurs 2 et 7. A ce dernier, est adjoint une mémoire de travail M3. Chaque appareil d'acquisition comporte aussi une alimentation électrique autonome 8.

Le processeur 2 agit en maître. Il a pour fonctions de réaliser le décodage des ordres transmis par la station centrale 1, et de gérer

- l'acquisition des signaux des récepteurs $R_1$ à $R_k$ par les différentes chaînes d'acquisition,
- les transmissions en relation avec l'unité 3;
- les mémoires $M_1$ et $M_2$ pour le stockage temporaire des données;
- les entrées-sorties;
- les interruptions entre programmes;
- les échanges avec le processeur de calcul DSP 7 etc.

Un processeur de calcul de ce type présente l'avantage d'avoir deux états différents, un état d'activité et un état de veille caractérisé par une consommation électrique extrêmement faible, quasiment nulle. Quand il a fini d'exécuter les traitements commandés par le processeur 2 et que celui-ci le remet dans l'état de veille, le processeur 7 est adapté à sauvegarder automatiquement le contexte de calcul, ce qui évite à chaque réactivation toute réinitialisation et donc toute perte de temps.

De par sa structure propre, le processeur DSP 7 est particulièrement adapté à effectuer à grande vitesse des opérations telles que des conversions de format, des multiplications de nombres complexes, des transformations de Fourier du type FFT, des corrélations entre les signaux reçus et les signaux émis, des filtrages numériques, des sommations de tirs successifs avec élimination des bruits perturbateurs de nature non sismique, des combinaisons entre eux des signaux délivrés par des récepteurs sismiques multi-axes tels que des géophones tri-axiaux par exemple, etc. Le processeur 7 peut aussi mettre en oeuvre des algorithmes de compression de données de façon à réduire le volume de données à transmettre et donc réduire soit le temps de transmission soit la largeur de bande hertzienne nécessaire etc.

Les pré-traitements accomplis localement avant transmission contribuent à réduire sensiblement le nombre de tâches dévolues à la station centrale 1 et donc la puissance de calcul installée qui devient considérable quand le nombre de traces sismiques à acquérir en temps réel est de plusieurs centaines voire même dépasse mille.

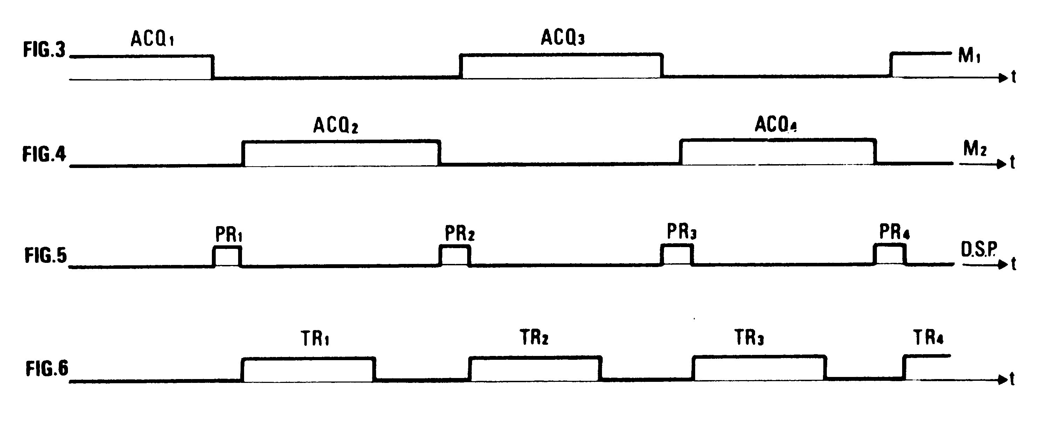

Cet arrangement à deux processeurs 2 et 7 offre, sans affecter le déroulement normal des opérations de gestion par le processeur de gestion 2, la possibilité de procéder en temps réel à de nombreuses opérations préalablement à la transmission des données à la station centrale 1. L'utilisation alternée des deux blocs de mémoire $M_1$, $M_2$ rend possible par exemple la transmission de données collectées durant un cycle d'émission-réception et pré-traitées durant la collecte des signaux sismiques du cycle suivant par exemple les chronogrammes de la Fig.3. $ACQ_1$, $ACQ_2$... $ACQ_4$ représentent quatre périodes de réception et d'acquisition de données simiques successives réparties sur les deux blocs de mémoire $M_1$ et $M_2$, $PR_1$, $PR_2$ ..., des intervalles de temps de pré-traitement des données suivant immédiatement chacun des intervalles d'acquisition et $TR_1$, $TR_2$, ..., les créneaux de transmission des données acquises respectivement au cours des périodes $ACQ_1$, $ACQ_2$ etc, et pré-traitées par le processeur DSP 7 durant les périodes de calcul $PR_1$, $PR_2$ etc.

Les processeurs de calcul du type DSP étant très rapides, leur durée d'activité à chaque cycle d'acquisition est relativement réduite. Leur consommation électrique reste en moyenne très faible par conséquent, ce qui les rend compatibles avec un emploi dans des boîtiers d'acquisition pourvus d'une alimentation autonome.

On peut utiliser avantageusement une mémoire Mp du type mémoire permanente "flash" réinscriptible, de façon à télécommander éventuellement depuis la station centrale ou le boîtier de commande 6, le changement de certains jeux d'instructions, ce qui permet de changer certaines fonctionnalités des appareils d'acquisition et notamment de commander la réalisation de pré-traitements par le processeur de calcul 7.

Le chargement à distance de programmes spécifiques, peut notamment permettre l'exécution par chaque appareil d'acquisition de tests préalables des capteurs et des chaînes électroniques d'acquisition.

Les opérations de tests ou qualifications de l'équipement de terrain (récepteurs et/ou appareils d'acquisition) sont conduites par exemple de la manière suivante.

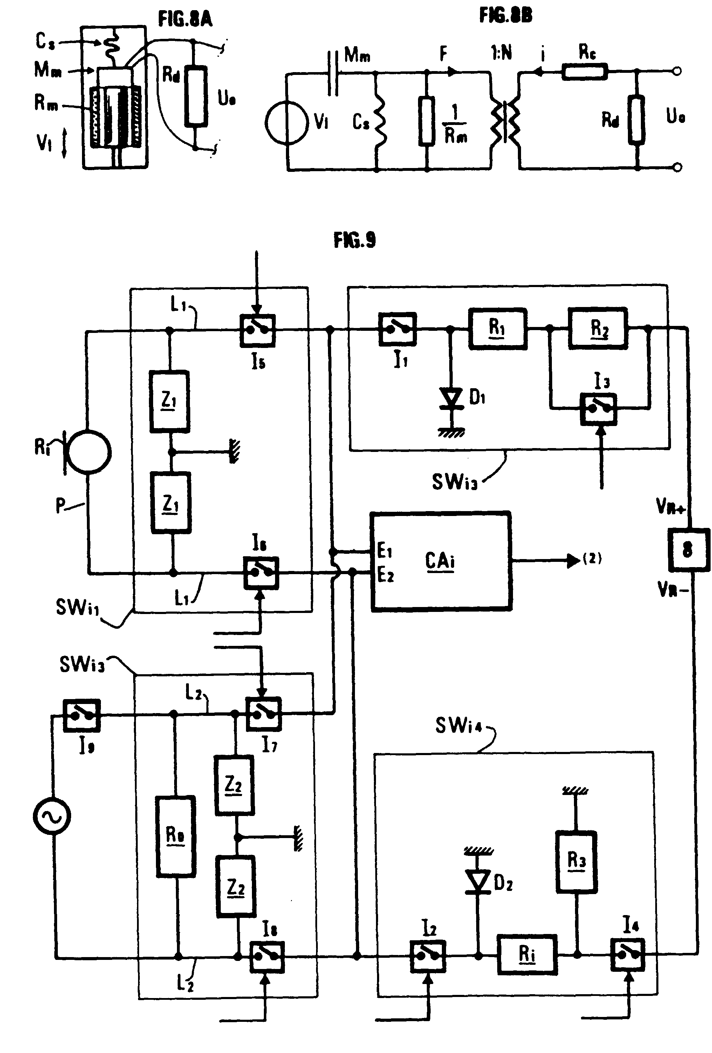

Il est connu des spécialistes en transducteurs électro-mécaniques, que l'on peut modéliser la réponse d'un capteur tel qu'un géophone par exemple quand il est soumis à un ébranlement, en déterminant par analogie les caractéristiques d'un circuit électrique constitué d'une combinaison appropriée d'éléments passifs: résistances, condensateurs, self-induction etc, qui offre une courbe de réponse identique Le géophone comporte généralement (Fig.8A) une bobine mobile de masse Mm soutenue par des ressorts de coefficient d'élasticité ou compliance Cs dans l'entrefer d'un aimant solidaire d'un boitier couplé avec le sol. Rm est son coefficient d'amortissement. Il est chargé par une résistance électrique Rd extérieure.

Par analogie, on fait correspondre une tension électrique V à la vitesse relative U de la bobine mobile par rapport au sol, un courant électrique I, à la force appliquée F. Le circuit électrique équivalent (Fig.8B) comporte un circuit primaire couplé par un transformateur de rapport 1:N à un circuit secondaire. La masse mobile Mm est traduite par une capacité électrique, la compliance Cs du ressort, par une self-induction. Le coefficient d'amortissement D est déterminé à la fois par l'amortissement mécanique interne 1/Rm et par la résistance de charge Rd. La sensibilité du géophone est traduite par le rapport 1:N du transformateur qui change la vélocité de la bobine en une tension électrique. Rc représente la résistance électrique du géophone.

Le circuit modélisant le géophone est régi par une équation différentielle linéaire du second ordre que l'on sait résoudre par une méthode de résolution itérative connue en soi qui est décrite par exemple par Steiglitz et al in IEEE Trans. Automat. Contr. vol AC-10 pp 461-464.

Ayant choisi des valeurs initiales pour les composants électriques équivalents, on détermine la courbe de réponse correspondante, on l'analyse et, en fonction des écarts constatés par rapport à la courbe de réponse réelle produite par le géophone, on incrémente les valeurs initiales choisies pour des éléments du circuit équivalent et on calcule la courbe de réponse modifiée. Par itérations successives, on fait converger les valeurs des éléments du circuit équivalent jusqu'à annuler sensiblement les écarts entre les courbes de réponse. On en déduit les caractéristiques électro-mécaniques réelles de chaque récepteur.

La mise en oeuvre de ce processus itératif implique des calculs complexes connus des spécialistes en matière de traitement des signaux, tels que des calculs matriciels, du filtrage numérique, des calculs de fonctions transcendentales etc. L'emploi d'un processeur spécialisé tel que le processeur 7 qui peut accomplir ces calculs complexes de façon quasi-instantanée, permet de mener des tests sur le terrain dans la phase préalable de déploiement de l'équipement sismique, qui autrement seraient impossibles, comme on le verra dans la suite de la description.

Pour mesurer les caractéristiques de chaque récepteur Ri, on connecte (Fig.9) chacun des deux fils conducteurs L1 associés aux entrées e1, e2 de la chaîne d'acquisition CAi associée, par l'intermédiaire d'une première unité de commutation SW1 comportant deux interrupteurs électroniques $I_4$, $I_5$ et deux impédances élevées Z1 qui le chargent symétriquement par rapport à la masse.

L'unité d'alimentation électrique 8 produit deux tensions de référence symétriques VR+ et VR-. La première est appliquée à une deuxième unité de commutation SW2 comportant une résistance R2 pouvant être court-circuitée par un interrupteur $I_3$, en série avec une deuxième résistance R1 et une diode D1. La tension aux bornes de celle-ci est appliquée à l'entrée e1 de la chaîne d'acquisition CAi par l'intermédiaire d'un interrupteur $I_1$.

On dispose aussi d'un oscillateur 9 connecté à une troisième unité de commutation SW3 comportant une résistance de charge calibrée RO de valeur relativement faible et deux impédances élevées Z2 qui le chargent symétriquement par rapport à la masse. Les deux conducteurs $L_2$ associés à l'oscillateur 9, sont connectés respectivement aux entrées $e_1$ et $e_2$ de la chaîne CAi par l'intermédiaire de deux interrupteurs $I_7$ et $I_8$. La tension d'alimentation $V_R$- produite par l'unité d'alimentation 8, est appliquée via un interrupteur $I_4$, à une résistance R3 en parallèle avec une diode D2 elle-même en série avec une résistance R'1. La tension aux bornes de la diode D2 est appliquée à l'entrée $e_2$ de la chaîne CA2 par l'intermédiaire d'un interrupteur $I_2$.

Dans le cas où plusieurs récepteurs Ri sont associés à un même appareil d'acquisition, on relie l'oscillateur local 9 à chaque unité de commutation SW3 par l'intermédiaire d'un interrupteur $I_9$ de façon à le connecter sélectivement pour certains types de test comme on le verra par la suite.

Le système de réception ayant été mis en place sur le terrain, des séquences de test sont déclenchées de façon à déterminer les caractéristiques réelles de chaque récepteur sismique associé: résistance électrique, sensibilité, fréquence propre, coefficient d'amortissement, fuites de courant vers la terre etc, tenant compte des conditions de couplage effectives de chaque capteur avec les terrains.

La commande peut être transmise depuis la station centrale à chaque appareil d'acquisition qui rend compte en retour du résultats des tests.

La commande peut également être passée par un opérateur déplacé sur le terrain qui communique ses ordres directement au moyen du boitier de transmission à infra-rouges 6. Ce mode opératoire est avantageux car il permet un contrôle d'implantation. Sous le contrôle du processeur de gestion 2, le processeur spécialisé 7 calcule instantanément les caractéristiques du récepteur et par la même voie de transmission par infra-rouges, communique les résultats à l'opérateur qui les lit aussitôt sur l'écran de son boitier 6. Si les résultats obtenus s'écartent trop des valeurs attendues, l'opérateur peut aller corriger les anomalies: branchements électriques, implantation dans le sol et/ou couplage défectueux.

Le processeur 2 relayé pour les calculs par le processeur spécialisé 7, peut commander successivement plusieurs séquences de test.

Une première séquence consiste à mesurer les caractéristiques de chaque récepteur Ri.

a) A cet effet, l'oscillateur local 9 étant hors circuit et les interrupteurs I7 et I8 étant ouverts, le processeur commande la fermeture des interrupteurs I3, I4 , I5 et I6 et la fermeture des interrupteurs I1 et I2 pendant une "fenêtre" de temps T1 de façon à appliquer un échelon de tension au récepteur Ri. A l'issue de l'intervalle T1 quand I1 et I2 sont de nouveau ouverts, le processeur 2 commande l'acquisition de la réponse CR (Fig.9) du récepteur par la chaîne d'acquisition CAi et notamment de l'amplitude V1 .

b) La même opération est effectuée ensuite en déconnectant le récepteur Ri (ouvertures de I5 et I6) et en connectant à sa place la résistance de charge calibrée RO de l'oscillateur 9 de façon à mesurer l'amplitude $V_2$ de l'échelon de tension appliqué.

A l'issue des étapes a) et b), les amplitudes V1 et V2 ayant été mesurées, le processeur spécialisé 7, détermine la résistance statique du récepteur Ri par la relation :

$$R_s = k \frac{(2V_R - V_2)}{V_2} \bullet \frac{V_1}{(2V_R - V_1)}$$

où k est un coefficient de proportionalité.

c) Par application de la méthode itérative déjà mentionnée. et dont l'exécution est déléguée au processeur 7, on détermine les caractéristiques du circuit électrique modélisant le comportement de chaque récepteur Ri suivant un processus itératif défini plus haut et on en déduit les caractéristiques électro-mécaniques et électriques réelles de celui-ci, telles que sa fréquence propre, son coefficient d'amortissement ainsi que sa sensibilité..

Les processeurs 2 et 7 sont également programmés pour effectuer d'autres tests sur chaque récepteur.

On peut par exemple recommencer l'étape a) précédente avec application au récepteur Ri d'une impulsion de courant de durée T2 plus courte que T1 et acquisition de sa réponse par la chaîne d'acquisition CAi associée. Dans ce cas, l'appareil d'acquisition peut vérifier que les réponses des différents récepteurs associés à leurs chaînes d'acquisition respectives, sont bien en phase et ont des formes sensiblement identiques. Par un calcul dit de FFT, on peut déterminer notamment la fréquence de coupure effective des filtres F1, F2 (Fig. 2) de chaque chaîne et leurs pentes d'atténuation. Dans le cas contraire, chaque appareil d'acquisition est en mesure de fournir un message d'anomalie pour sa transmission soit à la station centrale soit à un opérateur dans le voisinage.

On peut procéder aussi à une mesure des courants de fuite entre chaque récepteur et la terre. A cet effet, ayant commandé au préalable la fermeture des interrupteurs I1 et I2, l'ouverture des interrupteurs I3, I4, I6 et I8, on commande la fermeture des interrupteurs I5 et l'ouverture de l'interrupteur I7. A titre de comparaison, on mesure ensuite le même courant de fuite dans la résistance de comparaison RO simplement en inversant les états des interrupteurs I5 et I7 précédents, le premier étant ouvert et le second, fermé.

En connectant l'oscillateur local 9 en parallèle sur la résistance R0 avec fermeture des interrupteurs I7, I8, I9 et ouverture des interrupteurs I5 et I6, les processeurs 2, 7 peuvent déclencher l'acquisition du signal qu'il délivre et, déterminer si la réponse de la chaîne d'acquisition CAi est correcte pour différente fréquences et mesurer la distorsion. Dans le cas où plusieurs récepteurs sont reliés à un même appareil d'acquisition et l'oscillateur local 9 étant connecté à l'unité SW3 de l'un d'entre eux, on peut aussi par fermeture des interrupteurs I5, I6 associés à l'un des autres, mesurer la diaphonie existant entre les voies.

Les caractéristiques mesurées ou calculées sont mémorisées dans les mémoires M1 ou M2 et disponibles pour leur transmission à la station centrale ou à l'opérateur..

On a décrit des moyens de traitement pourvus de deux unités 2 et 7 ayant des fonctions distinctes. On ne sortirait pas du cadre de l'invention en utilisant par exemple un processeur unique capable de remplir à lui tout seul toutes les fonctionnalités des deux processeurs 2 et 7.

**Revendications**

1. Système d'acquisition sismique avec des capacités de traitement décentralisées, permettant de réduire notablement le volume des données échangées entre au moins un appareil d'acquisition (Bi) adapté à collecter les données reçues par un ensemble de récepteurs sismiques (Ri) couplés avec une zone à explorer, et au moins une unité de commande (1,6), par l'intermédiaire de moyens de liaison, chaque appareil d'acquisition (Bi) comprenant au moins une chaîne d'acquisition ($CA_1$-$CA_n$) pour numériser les signaux reçus par un ou plusieurs récepteurs couplés avec ladite zone en réponse à des signaux sismiques transmis dans la zone à explorer, un ensemble de contrôle (Ai) pour piloter l'acquisition et la mémorisation de signaux, et effectuer des traitements sur les signaux acquis et une unité d'émission-réception (3) communiquant avec l'unité de commande, caractérisé en ce que chaque ensemble de contrôle comporte une première unité de gestion (2) et un processeur spécialisé dans le traitement de signal DSP (7) qui est piloté par l'unité de gestion (2) et programmé pour opérer des contrôles de qualité de chaque récepteur sismique et de chaque chaîne d'acquisition, ledit processeur (7) étant adapté à fonctionner suivant deux modes de fonctionnement différents, l'un, en mode actif pour effectuer lesdits traitements des données et l'autre, un mode de veille correspondant à une consommation électrique plus réduite.

**2.** Système selon la revendication 1, caractérisé en ce que chaque ensemble de contrôle est adapté à déterminer sans délai les caractéristiques électriques et électro-mécaniques de chaque récepteur sismique par détermination de paramètres d'un circuit électrique modélisant ledit récepteur.

**3.** Système selon l'une des revendications précédentes, caractérisé en ce qu'il comporte des moyens pour réaliser une compression de signaux numérisés à transmettre.

**4.** Système selon l'une des revendications précédentes, caractérisé en ce qu'il comporte des moyens pour combiner des signaux sismiques reçus à des instants différents par un ou plusieurs desdits récepteurs.

**5.** Système selon l'une des revendications précédentes, caractérisé en ce que l'unité de commande est une station centrale de commande et d'enregistrement de signaux sismiques.

**6.** Système selon l'une des revendications précédentes, caractérisé en ce que l'unité de commande est un boitier de commande (6) pouvant être relié à chaque appareil d'acquisition par une liaison courte, telle qu'une liaison par rayons infra-rouges, et permettant à un opérateur d'ordonner la conduite immédiate de contrôles de qualité dans le but de vérifier la bonne implantation de chaque récepteur et le fonctionnement de chaque chaîne d'acquisition.

**7.** Système selon l'une des revendications précédentes, caractérisé en ce que chaque appareil d'acquisition comporte deux blocs de mémorisation ($M_1$, $M_2$) pour le stockage en alternance de données reçues durant des cycles d'émission-réception successifs, et des moyens de transmission (3, 4, TC) pour transmettre au moins une partie des données contenues dans un premier ($M_1$) des deux blocs de mémorisation pendant l'acquisition et le stockage de données dans le deuxième bloc de mémorisation ($M_2$).

**8.** Système selon l'une des revendications précédentes, caractérisé en ce que chaque appareil d'acquisition comporte une mémoire permanente (Mp) réinscriptible pour des instructions reçues de l'unité de commande (1,6) via lesdits moyens de liaison (3,4, TC).

**9.** Système selon l'une des revendications précédentes, caractérisé en ce que chaque appareil d'acquisition comporte un premier module et un deuxième module de commutation (SW1, SW2) associés à chaque récepteur pour connecter celui-ci et une résistance de référence (RO) successivement à l'entrée d'une chaîne d'acquisition de signaux (CA), un troisième et un quatrième module de commutation (SW3, SW4) connectés à un bloc d'alimentation (8) pour appliquer des impulsions de tension ou de courant au récepteur (R) et à la résistance de référence (RO) associée, et au moins un oscillateur local (9) pour appliquer des signaux de fréquence et/ou d'amplitude déterminée(s) à l'entrée de la chaîne d'acquisition.

**10.** Système selon la revendication précédente caractérisé en ce qu'il comporte des moyens de commutation (I9) pour appliquer successivement lesdits signaux de fréquence déterminée à plusieurs récepteurs associés à un même appareil d'acquisition et des moyens pour mesurer la diaphonie et la distorsion.

**11.** Système selon la revendication 9, caractérisé en ce que les moyens de traitement sont adaptés à commander lesdits modules de commutation (SW1-SW4) pour mesurer les courants de fuite entre chaque récepteur (Ri) et la terre.

**12.** Système selon la revendication 10 ou 11, caractérisé en ce que les moyens de traitement sont adaptés à effectuer des transformées de Fourier rapides (FFT) dans le but de tester chaque chaîne d'acquisition (CA).

**13.** Système selon l'une des revendications précédentes, caractérisé en ce que l'ensemble de contrôle (2, 7) est adapté à effectuer des corrélations entre les signaux sismiques reçus par les récepteurs et les signaux sismiques transmis et à transmettre les résultats des corrélations à l'unité d'émission-réception pour leur transmission à l'unité de commande (1,6).

**14.** Système selon la revendication 2, caractérisé en ce que chaque ensemble de contrôle (2, 7) comporte des moyens de test de chaque récepteur sismique après son implantation sur le terrain par détermination itérative du circuit électrique équivalent modélisant au mieux les caractéristiques électriques et électro-mécaniques de chaque récepteur sismique.

**Patentansprüche**

**1.** Seismisches Erfassungssystem mit dezentralen

Verarbeitungskapazitäten zur deutlichen Verringerung der mittels einer Verbindungseinrichtung auszutauschenden Datenmenge zwischen wenigstens einer zum Erfassen der mit einer Gruppe seismischer an eine zu explorierende Zone gekoppelter Empfänger (Ri) empfangenen Daten ausgelegten Erfassungseinrichtung (Bi) und wenigstens einer Steuereinheit (1, 6), wobei

jede Erfassungseinrichtung (Bi) umfaßt wenigstens eine Empfangskette ($CA_1 - CA_n$) zum Digitalisieren der mittels einem oder mehreren mit besagter Zone gekoppelter Empfänger empfangenen Signale in Reaktion auf die in die zu explorierende Zone übertragenen seismischen Signale,

eine Steuergruppe ($A_i$) zum Leiten der Erfassung und der Speicherung der Signale und zum Ausführen der Verarbeitung der erfaßten Signale, und

eine mit der Steuereinheit kommunizierende Sende-Empfangseinheit (3),

dadurch gekennzeichnet,

daß jedes Steuergruppe eine erste Verwaltungseinheit (2) und einen auf die Verarbeitung eines Signals DSP (7) spezialisierten Prozessor umfaßt, das mittels der Verwaltungseinheit (2) geführt und zum Ausführen der Qualitätskontrolle eines jeden seismischen Empfängers und einer jeden Erfassungskette programmiert ist, wobei der besagte Prozessor (7) für folgende zwei unterschiedliche Betriebsmoden ausgelegt ist, wobei der eine ein Aktivmodus zur Ausführung der besagten Datenverarbeitung und der andere ein einen verminderteren elektrischen Verbrauch aufweisender Stand-by-Modus ist.

2. System nach Anspruch 1,
   dadurch gekennzeichnet,

   daß jedes Steuergruppe zum Bestimmen der elektrischen und elektromechanischen Eigenschaften eines jeden seismischen Empfängers ohne Verzögerung durch Bestimmung der Parameter einer den besagten Empfänger bildenden elektrischen Schaltung ausgelegt ist.

3. System nach einem der vorhergehenden Ansprüche,
   dadurch gekennzeichnet,

   daß es Mittel zum Realisieren einer Komprimierung der zum Übertragen digitalisierten Signale umfaßt.

4. System nach einem der vorhergehenden Ansprüche,
   dadurch gekennzeichnet,

   daß es Mittel zum Kombinieren der zu unterschiedlichen Momenten empfangenen seismischen Signale durch einen oder mehrere der besagten Empfänger umfaßt.

5. System nach einem der vorhergehenden Ansprüche,
   dadurch gekennzeichnet,

   daß die Steuereinheit eine Zentraleinheit zum Steuern und Speichern der seismischen Signale ist.

6. System nach einem der vorhergehenden Ansprüche,
   dadurch gekennzeichnet,

   daß die Steuereinheit ein Steuergehäuse (6) ist, das mit einer jeden Erfassungseinrichtung über eine kurze Verbindung sowie eine Verbindung mittels Infrarotstrahlen verbunden sein kann, und einem Bediener die Anordnung der sofortigen Durchführung der Qualitätskontrolle zum Zwecke der Bestätigung einer guten Aufstellung eines jeden Empfängers und dem Funktionieren einer jeden Gewinnungskette erlaubt.

7. System nach einem der vorhergehenden Ansprüche,
   dadurch gekennzeichnet,

   daß jede Erfassungsvorrichtung zwei Speicherblöcke ($M_1$, $M_2$) zum abwechselnden Speichern der Empfangsdaten der aufeinanderfolgenden Sende-Empfangs-Zyklen, und Übertragungsmittel (3, 4, TC) zum Übertragen wenigstens eines Teils der im ersten ($M_1$) der zwei Speicherblöcke enthaltenen Daten während der Gewinnung und dem Speichern der Daten im zweiten Speicherblock umfaßt.

8. System nach einem der vorhergehenden Ansprüche,
   dadurch gekennzeichnet,

   daß jede Erfassungseinrichtung einen wiederbeschreibbaren Permanentspeicher (Mp) für die von der Steuereinheit (1; 6) über die besagten Verbindungsmittel (3, 4, TC) empfangenen Befehle umfaßt.

9. System nach einem der vorhergehenden Ansprüche,
   dadurch gekennzeichnet,

   daß eine jede Erfassungsvorrichtung umfaßt ein erstes und ein zweites an einen jeden Empfänger angeschlossenes Schaltmodul (SW1, SW2) zum aufeinanderfolgenden Verbinden des Empfängers und eines Referenzwiderstandes (RO) mit dem Eingang einer Signalerfassungskette (CA),

ein drittes und ein viertes mit einem Versorgungsblock (8) zum Anlegen von Spannungs- oder Strompulsen an einen Empfänger (R) und an den angeschlossenen Referenzwiderstand (RO) verbundenes Schaltungsmodul, und wenigstens einen lokalen Oszillator (9) zum Anlegen eines bestimmten bzw. bestimmter Frequenz- oder Amplitudensignale am Eingang der Erfassungskette.

10. System nach einem der vorhergehenden Ansprüche,
dadurch gekennzeichnet,

daß es Schaltmittel (I9) zum aufeinanderfolgenden Anlegen der besagten Signale mit vorbestimmter Frequenz an mehrere an eine gleiche Erfassungseinrichtung angeschlossener Empfänger und an Mittel zum Messen eines Übersprechens und einer Verzerrung umfaßt.

11. System nach Anspruch 9,
dadurch gekennzeichnet,

daß die Verarbeitungsmittel zum Steuern der besagten Schaltmodule (SW1-SW4) ausgelegt sind, um die Verlustströme zwischen einem jeden Empfänger (Ri) und dem Erdboden zu messen.

12. System nach Anspruch 10 oder 11,
dadurch gekennzeichnet,

daß die Verarbeitungsmittel zum Ausführen einer schnellen Fouriertransformation (FFT) zum Zwecke des Testen einer jeden Erfassungskette (CA) ausgelegt sind.

13. System nach einem der vorhergehenden Ansprüche,
dadurch gekennzeichnet,

daß die Steuergruppe (2, 7) ausgelegt ist zum Ausführen von Korrelationen zwischen seismischer von den Empfängern empfangener Signale und den übertragenen seismischen Signalen und
zum Übertragen der Ergebnisse der Korrelationen zur Sende-Empfangseinheit für ihre Übertragung an die Steuereinheit (1, 6).

14. System nach Anspruch 2,
dadurch gekennzeichnet,

daß jedes Steuergruppe (2, 7) Mittel zum Testen eines jeden seismischen Empfängers nach seiner Aufstellung auf den Erdboden durch eine iterative Bestimmung der äquivalenten elektrischen Schaltung, die am besten die elektrischen und elektromechanischen Eigenschaften eines jeden seismischen Empfängers bildet.

**Claims**

1. A seismic acquisition system with decentralised processing capability, used in particular to reduce significantly the volume of data exchanged between at least one acquisition device (B1) programmed to collect the data received by an array of seismic receivers (Ri) coupled with a zone under exploration and at least one control unit (1, 6) by means of linking means, each acquisition device (Bi) having at least one acquisition chain $(CA_1\text{-}CA_n)$ for digitising the signals received by one or more receivers coupled with said zone in response to seismic signals transmitted in the zone under exploration, a control unit (Ai) to pilot the acquisition and store the signals as well as process the acquired signals and a transmitter-receiver unit (3) communicating with the control unit, characterised in that each control unit has a first management unit (2) and a processor specialised in signal processing DSP (7) which is driven by the management unit (2) and programmed to run quality checks on each seismic receiver and each acquisition chain, said processor (7) being set up to function in two different operating modes, one an active mode during which said data are processed and the other a stand-by mode during which power consumption is very much reduced.

2. A system as claimed in claim 1, characterised in that each control unit is set up to determine, without a delay, the electrical and electro-mechanical characteristics of each seismic receiver by determining parameters of an electric circuit modelling said receiver.

3. A system as claimed in one of the preceding claims, characterised in that it has means for compressing digital signals to be transmitted.

4. A system as claimed in one of the preceding claims, characterised in that it has means for combining seismic signals received at different instants by one or more of said receivers.

5. A system as claimed in one of the preceding claims, characterised in that the control unit is a central station for controlling and recording seismic signals.

6. A system as claimed in one of the preceding claims, characterised in that the control unit is a control box (6) which can be linked to each acquisition device by a short link, such as an infrared-ray link, and allows an operator to issue instructions to run quality control checks immediately in order to check that each receiver is correctly installed and each acquisition chain is operating correctly.

7. A system as claimed in one of the preceding claims, characterised in that each acquisition device has two memory blocks ($M_1$, $M_2$) for storing alternately data received during successive transmission-reception cycles and transmission means (3, 4, TC) for transmitting at least a proportion of the data contained in a first ($M_1$) of the two memory blocks whilst data are being acquired and stored in the second memory block ($M_2$).

8. A system as claimed in one of the preceding claims, characterised in that each acquisition device has a re-writeable permanent memory (Mp) for instructions received from the control unit (1, 6) via said linking means (3, 4, TC).

9. A system as claimed in one of the preceding claims, characterised in that each acquisition device has a first and a second switching module (Sw1, SW2) assigned to each receiver in order to connect it and a reference resistance (RO) successively to the input of a signal acquisition chain (CA), a third and a fourth switching module (SW3, SW4) connected to a power pack (8) to apply voltage or current pulses to the receiver (R) and the assigned reference resistance (RO) and at least one local oscillator (9) for applying signals of a given frequency and/or amplitude to the input of the acquisition chain.

10. A system as claimed in the preceding claim, characterised in that it has switching means (I9) for applying said signals of a given frequency successively to several receivers assigned to a same acquisition device and means for measuring crosstalk and distortion.

11. A system as claimed in claim 9, characterised in that the processing means are programmed to control said switching modules (SW1-SW4) in order to measure leakage currents between each receiver (Ri) and the ground.

12. A system as claimed in claim 10 or 11, characterised in that the processing means are programmed to apply fast Fourier transforms (FFT) in order to test each acquisition chain (CA).

13. A system as claimed in one of the preceding claims, characterised in that the control unit (2, 7) is programmed to correlate the seismic signals received by the receivers with the seismic signals transmitted and to transmit the results of the correlations to the transmitter-receiver unit so that they can be transmitted on to the control unit (1, 6).

14. A system as claimed in claim 2, characterised in that each control unit (2. 7) has means for testing each seismic receiver after it has been installed in the field by setting up an equivalent electric circuit by iteration, modelling as best possible the electrical and electro-mechanical characteristics of each seismic receiver.

FIG.1

FIG.2

FIG.3 ACQ₁ ACQ₃ M₁ t

FIG.4 ACQ₂ ACQ₄ M₂ t

FIG.5 PR₁ PR₂ PR₃ PR₄ D.S.P. t

FIG.6 TR₁ TR₂ TR₃ TR₄ t

EP 0 615 627 B1

**FIG.7**

**FIG.10**

FIG.8A

FIG.8B

FIG.9